# EUROPÄISCHE PATENTSCHRIFT

(11) **EP 0 343 260 B1**
(45) Veröffentlichungstag und Bekanntmachung des Hinweises auf die Patenterteilung: **12.01.1994**
(21) Anmeldenummer: 88107725.9
(22) Anmeldetag: 13.05.1988
(51) Int. Cl.: C12F 1/00, C12G 3/12

(54) **Verfahren und Vorrichtung zur Behandlung von Obstbranntweinen**
Process and device for the treatment of fruit spirits
Procédé et appareil pour le traitement de l'eau-de-vie de fruit

(30) Priorität: 02.05.1988 DE 3814841
(43) Veröffentlichungstag der Anmeldung: 29.11.1989
(73) Patentinhaber: FIRMA ARNOLD HOLSTEIN, D-88677 Markdorf (DE)
(72) Erfinder: Holstein, Arnold, D-7778 Markdorf (DE)
(74) Vertreter: Patentanwälte Eisele, Otten & Roth

(56) Entgegenhaltungen:
- DE-A- 3 708 901
- DE-C- 666 465
- GB-A- 419 436
- SCHWEIZERISCHE ZEITSCHRIFT FÜR OBST- UND WEINBAU, Band 123, Nr. 22, 1987,Seiten 595-597, Waedenswil, CH; E. RITZMANN et al.: "Herstellung vonSteinobstdestillaten mittels einer Raschigring-Kolonne"

## Beschreibung

Die Erfindung betrifft ein Verfahren zur Reduzierung des Cyanidgehalts und damit zur Verminderung der Bildung von Ethylcarbamat (EC) in Steinobstbranntweinen sowie eine Vorrichtung zur Durchführung des Verfahrens nach dem Oberbegriff des Verfahrens- bzw. des Vorrichtungsanspruchs.

Seit einigen Jahren sind in der Forschung außerordentlich hohe Anstrengungen unternommen worden, um das Vorkommen von Ethylcarbamat (Urethan in Spirituosen), insbesondere in Steinobstbranntweinen als krebserzeugende Substanzen nachzuweisen und diesen Stoff zu beseitigen (s. Fachzeitschrift "Die Kleinbrennerei, Mai 1986, S. 57).

In einer Vielzahl von weiteren Veröffentlichungen von Fachzeitschriften wurde auf das gesundheitliche Risiko von Ethylcarbamat ab bestimmten Konzentrationen hingewiesen. Eine umfangreiche Untersuchung hierzu ist in der Fachzeitschrift "Alkohol-Industrie", Heft 16, S. 369 ff. sowie Heft 17, S. 104 ff. unter dem Titel "Ethylcarbamat in Obstbranntweinen", Teil 1 und 2 abgedruckt. In diesem Artikel wird festgehalten, daß die Ursache für das krebserregende Ethylcarbamat (EC) Cyanid-Bestandteile sind, die insbesondere durch Lichteinfluß in Ethylcarbamat umgewandelt werden. Je höher der Cyanidgehalt unmittelbar nach der Destillation, umso höher der EC-Gehalt nach Lichteinwirkung. Durch Lichteinfluß kann der EC-Wert um bis zum 10fachen steigen. Als mögliche Ursachen für den Cyanidgehalt werden beschädigte Steine im Steinobst, überreife Früchte oder unzulängliche Maischelagerung genannt. Zur Verminderung des Cyanid-Anteils und damit des hieraus entstehenden EC-Anteils werden eine Reihe von Maßnahmen im Destillationsprozeß vorgeschlagen (Z: Alkohol-Industrie a.a.O. 16/87, S. 372). Diese Maßnahmen betreffen zunächst das Einmaischen, Maßnahmen nach Abschluß der Gärung, Empfehlungen bei und nach der Destillation sowie Lagerung des Destillats im Dunkeln und Abfüllung in dunkle Flaschen. Beim Destillationsvorgang mit Verstärkerkolonnen werden bestimmte Destillationsgeschwindigkeiten und die Abtrennung eines ausreichenden Vorlaufs bzw. eines Nachlaufs spätestens ab 60 Vol.% empfohlen.

In einer weiteren Fachzeitschrift Z: Früchte + Gemüse, Hr. 29, 24.09.87 wird unter dem Artikel "Herstellung von Steinobstdestillaten mittels einer Raschigring-Kolonne" empfohlen, den Gehalt des Ethylcarbamats mittels einer Raschigring-Kolonne über den Verstärkerböden zu reduzieren. Verbesserte Ergebnisse wurden bei einer Destillation mit drei Verstärkerböden mit Raschigring-Einsätzen erzielt, wobei die Raschigring-Einsätze mit Kupferringen zur Bildung einer großen Kontaktfläche für die Dämpfe gefüllt waren.

In der Zeitschrift Z: Alkohol-Industrie 17/87 (a.a.O.) wird auf S. 409 ff. ein neuartiges Silber-Salzverfahren zur Verhinderung der EC-Bildung in Obstbranntweinen vorgeschlagen.

Zur Abtrennung des schädlichen Cyanids ist es beispielsweise in jüngster Zeit auch bekannt geworden, zur Maische in die Brennblase Kupferverbindungen zuzugeben, was den Übergang von Cyanid sowohl in unerwünschte Schwefelverbindungen als auch eine Ethylcarbamatbildung im Licht verhindern soll. Hierdurch soll eine anorganische Substanz auf Kupferbasis als hochaktive Kupferoberfläche in der Brennblase wirken.

Im "Handbuch für die Brennerei- und Alkoholwirtschaft", 1988, Brennerei-Kalender 35. Jahrgang, S. 117 erfolgt der Hinweis, daß das Ethylcarbamat beim üblichen Gärungsprozeß gebildet wird. Eine Abhilfe oder Reduzierung der EC-Konzentration soll dadurch erfolgen, daß man das Destillat mehrfach destilliert.

Grundsätzlich wird vom Bundesgesundheitsamt empfohlen, daß der Wert des EC nach der Destillation unter 0,4 mg/l beschränkt wird.

Es sind demnach eine Vielzahl von Verfahren zur Reduzierung von Ethylcarbamat in Steinobstbranntweinen bekannt geworden, die jedoch alle auf mehr oder weniger starker Spekulation und Versuchen beruhen. Einig ist man sich darüber, daß das fertige Destillat einer ständigen Dunkellagerung unterzogen werden muß, zur Vermeidung der Umsetzung des Cyanids in Ethylcarbamat.

Aus dem "Handbuch der Getränketechnologie":
Pieper/Bruchmann/Kolb: Technologie der Oberbrennerei, Aufl. 1977, S. 217 ff. ist ferner bekannt, daß Kupfer als bevorzugter Werkstoff zur Herstellung der Brennblase verwendet wird. Dabei werden die katalytischen Eigenschaften des Kupfers während der Destillation im Sinne einer Aromaverbesserung hervorgehoben. Insbesondere bewirkt das Kupfer auch eine Bindung schwefelhaltiger Substanzen durch Umwandlung der Abbauprodukte Schwefelwasserstoff zu Kupfersulfid.

Vorstehende Ausführungen lassen erkennen, daß größte Anstrengungen zur Reduzierung von Ethylcarbamat in Steinobstdestillation unternommen werden. Gleichwohl zeigen die Veröffentlichungen insgesamt, daß noch kein befriedigendes Ergebnis aufgefunden worden ist, da in allen möglichen Verfahrensstufen herumexpertmentiert wird. Selbstverständlich tragen auch diese Verfahren zur Klärung des Problems bei.

Die Verwendung von katalytisch wirkenden anorganischen Substanzen auf Kupferbasis in der Maische erscheint infolge der groben Zusammensetzung der Maische wenig geeignet zu sein. Zumindest erfordert das grobe Ausgangsprodukt der Maische eine große Menge an katalytischer Substanz. Weiterhin bereitet die Entsorgung der Schlempe infolge des hohen Schwermetallgehalts der Kupferzugabe große Probleme.

Auch die Verwendung von kupferförmigen Raschigringen auf den Verstärkerböden erbringt nur unbefriedigende Ergebnisse, da die Kupferringe in erheblichen Mengen auf den Verstärkerboden innerhalb der Flüssigkeit angeordnet sein müssen und hierbei die Wirkung des Verstärkerbodens selbst erheblich beeinträchtigen. Dabei bilden eine Vielzahl von Raschigringen einen Schüttkörper, der auf den Verstärkerböden selbst keine optimalen Strömungsverhältnisse für einen ordentlichen Stoffaustausch zwischen Alkoholdämpfen und Rücklaufflüssigkeit zuläßt.

Der Erfindung liegt die Aufgabe zugrunde, ein verbessertes und einfacheres Verfahren zur Reduzierung des Cyanidgehaltes und damit zur Vermindung der Bildung von Ethylcarbamat in Steinobstbranntweinen vorzuschlagen, wobei die bisherigen Erkenntnisse mit Raschigringkolonnen auch im Hinblick auf eine Geschmacksverbesserung auszuwerten sind. Gleichermaßen liegt die Aufgabe der Erfindung darin, eine geeignete Vorrichtung bzw. Destillationsapparatur zur Durchführung des Verfahrens vorzuschlagen.

Diese Aufgabe wird ausgehend von einem Verfahren bzw. einer Vorrichtung zur Durchführung des Verfahrens nach dem Oberbegriff der jeweiligen Ansprüche erfindungsgemäß durch den kennzeichnenden Teil des Verfahrensanspruchs bzw. des Vorrichtungsanspruchs gelöst.

In den Unteransprüchen sind vorteilhafte Weiterbildungen und Verbesserungen des erfindungsgemäßen Grundgedankens angegeben.

Der Erfindung liegt die Erkenntnis zugrunde, daß ein entscheidender Fortschritt durch einen gezielten Einsatz eines Katalysators an bestimmter Stelle der Apparatur ermöglicht wird. Hierfür wurde erfindungsgemäß die Lage zwischen dem obersten Verstärkerboden und dem danach geschalteten Dephlegmator gewählt. Der Katalysator aus einer Vielzahl von Kupferrohren bzw. Kupferlamellenrohren weist eine immens große Oberfläche für eine gute katalytische Wirkung auf. Hierfür ist es maßgeblich, daß das vom Dephlegmator zurücklaufende Phlegma den Kupferkatalysator gleichmäßig an seiner Oberfläche benetzt, so daß ein Stoffaustausch zwischen den aufsteigenden Alkoholdämpfen und dem rückfließenden Phlegma sowie ein Abbau der schädlichen Cyanide an der Kupferoberfläche stattfindet. Durch die Kupferoberfläche wird ein analytisch meßbarer Abbau der gebundenen oder nicht gebundenen Cyanide bewirkt, so daß diese nicht oder nur in stark verminderter Konzentration in das Endprodukt gelangen.

Messungen mit dem erfindungsgemäßen Kupferkatalysator haben eindeutig verbesserte Werte des EC-Gehalts ergeben, wobei der Endwert des Ethylcarbamats (EC) im Destillat nach der Belichtung deutlich unter der zulässigen 0,4 mg/l-Grenze liegt. Darüber hinaus wurde eine geschmackliche Verbesserung des Obstbranntweines erreicht.

Ein Ausführungsbeispiel der Erfindung ist in der Zeichnung dargestellt und in der nachfolgenden Beschreibung näher erläutert. Es zeigen
- Fig. 1: eine schematische Darstellung des Destillationsapparates und
- Fig. 2a bis 2c: Ausführungsformen des Katalysators in Querschnittsdarstellung.

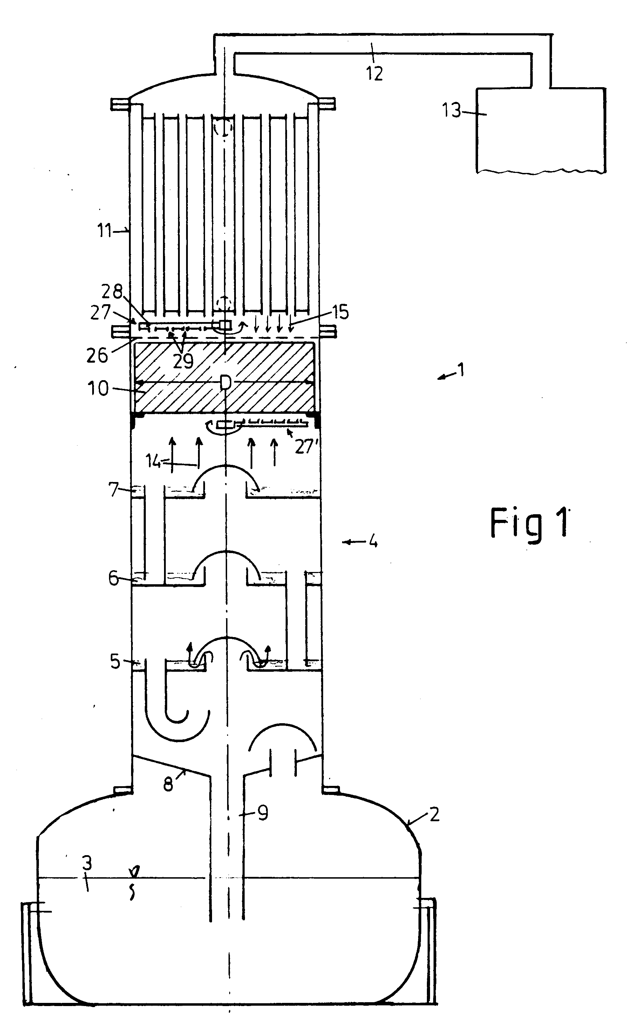

Die in der Fig. 1 dargestellte Destillationsapparatur 1 besteht aus einer wasserbeheizten Brennblase 2 mit eingelagerter Maische 3 zur Durchführung des Destillationsvorganges. Oberhalb der Brennblase 2 ist eine Verstärkerkolonne 4 bestehend aus drei Verstärkerböden bzw. Glockenböden 5 bis 7 angeordnet. Zwischen dem untersten Verstärkerboden 5 und der Brennblase 2 ist ein Prallblech 8 als Überkochvorrichtung angeordnet. Ein eventueller Rücklauf aus dem untersten Verstärkerboden 5 erfolgt über das Prallblech 8 und das Rücklaufrohr 9 in die Maische 3.

Die Verstärkerböden 5 bis 7 sind in an sich bekannter Weise als Rektifikationskolonne ausgebildet. Hierzu wird auf die Literaturstelle: Handbuch der Getränketechnologie (a.a.O.) S. 195 ff. verwiesen.

Oberhalb der Verstärkerböden 5 bis 7 befindet sich der erfindungsgemäße Katalysator 10, dessen näherer Aufbau noch beschrieben wird. In Durchflußrichtung der Destillationsapparatur folgt nach dem Katalysator der Dephlegmator 11, der als Röhren-Dephlegmator ausgebildet ist. Oberhalb des Dephlegmators 11 schließt sich das Geistrohr 12 an, welches zum schematisch dargestellten Röhrenkühler 13 führt.

Bei dem dargestellten Ausführungsbeispiel der Erfindung handelt es sich um eine Destillationsapparatur 1 nach dem sogenannten Gegenstromprinzip. Bei einer Gegenstromdestillation bewirken die Verstärkerböden und der Dephlegmator, daß dem von unten nach oben aufsteigenden Dampf stets ein Flüssigkeitsstrom entgegengeführt wird, so daß es zu einer innigen Berührung von Dampf- und Flüssigkeit und damit zu einem gegenseitigen Wärme- und Stoffaustausch kommt. Dabei wird der beim Durchgang durch die Destillationsapparatur kondensierende Dampf nicht voll als Destillat abgenommen, sondern vielmehr ein Teil des Kondensats stets wieder in flüssiger Form zurück geführt, so daß ein mehrfaches Aufkochen erfolgt.

Auf die bekannte Funktionsweise derartiger Apparaturen wird hingewiesen. Insbesondere wird verwiesen auf die Literaturstelle: "Handbuch der Getränketechnologie, Technologie der Obstbrennerei" (a.a.O., S. 195 ff.).

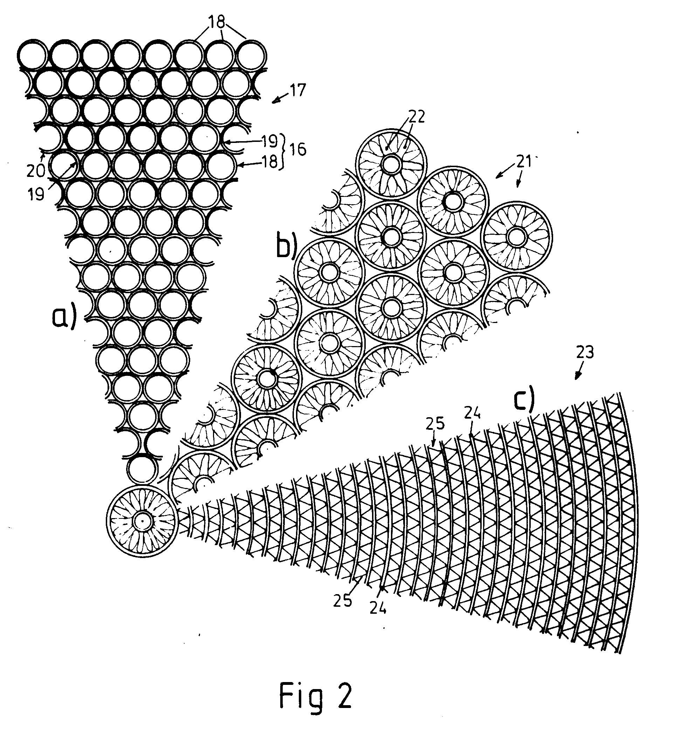

Der vom obersten Verstärkerboden 7 aufsteigende Alkoholdampf wird erfindungsgemäß durch den Katalysator 10, bestehend aus einer Vielzahl von Kupferrohren bzw. Kuferlamellen zur Bildung einer großen Oberfläche geleitet. Der Querschnitt des Katalysators ist in Fig. 2a bis c in verschiedenen Ausführungsformen dargestellt.

Der Katalysator wird vom rücklaufenden Phlegma des darüberliegenden Dephlegmators, ggf. mittels eines Verteilerbleches 26 gleichmäßig benetzt, so daß die komplette Oberfläche des Katalysators einen dünnen Flüssigkeitsfilm aufweist. Entlang dieses Flüssigkeitsfilmes am Katalysator strömt der vom obersten Verstärkerboden 7 aufsteigende alkoholhaltige Dampf 14, so daß es zu einer intensiven Berührung zwischen dem aufsteigenden Dampf 14, dem herabfließende Phlegma 15 und der Katalysatoroberfläche 16 kommt. Hierdurch folgt ein inniger Stoffaustausch zwischen Flüssigkeit und Dampf sowie ein Abbau der Cyanidbestandteile an der Kupferoberfläche. Der Katalysator 10 wirkt demnach gleichzeitig als Destillationsapparatur und als Katalysator für den Abbau bzw. die Umsetzung der schädlichen Cyanidbestandteile.

Der Katalysator 10 weist eine Fläche von beispielsweise 10 bis 15 m² bei einem Durchmesser D von beispielsweise 400 bis 450 mm auf. Durch die enorm große Oberfläche kann die Katalysatoroberfläche zur chemischen Umsetzung der schädlichen Cyanidbestandteile und damit zur Verhinderung der späteren Bildung von Ethylcarbamat durch Lichteinfluß oder sonstiger Umsetzung dienen.

In Fig. 2a bis 2c sind Ausführungsbeispiele für verschiedene Katalysatorenanordnungen dargestellt. Der Querschnitt des Kupfer-Katalysators 17 nach Fig. 2a besteht aus einer Vielzahl von Einzelrohren 18, die zu einem Rohrbündel zusammengefaßt sind. Das von oben herab strömende Phlegma 15 aus dem Dephlegmator 11 kann die Einzelrohre 18 sowohl an der inneren 19 als auch an der äußeren Mantelfläche 20 benetzen. Diese Flächen sind allgemein als Katalysatorflächen 16 bezeichnet.

Die in Fig. 2b dargestellten Lamellenrohre 21 unterscheiden sich vom Ausführungsbeispiel nach Fig. 2a dadurch, daß innerhalb der Rohre rosettenförmige Einsätze 22 vorgesehen sind, die die Katalysatoroberfläche 16 nochmals beträchtlich erhöhen. Die Funktionsweise ist wiederum die gleiche, d. h. das von oben herabfließende Phlegma benetzt die Lamellenrohre im Inneren und im Äußeren im vollen Umfang, so daß die Kupferoberfläche als benetzte Katalysatorfläche dient.

Eine weitere besonders preisgünstige Ausführungsform für eine Katalysatorform ist in Fig. 2c dargestellt. Bei diesem Lamellenkatalysator 23 befinden sich zwischen konzentrisch aufgewickelten Wänden 24 zickzackförmige Lamellen 25. Dieser Lamellenkatalysator laßt sich durch konzentrisches Aufwickeln eines zickzackförmigen Lamellenbleches 25 und eines glatten Bleches 24 als Zwischenwandung einfach und kostengünstig herstellen. Hierdurch kann jeder beliebige Durchmesser hergestellt werden, was insbesondere auch bei einer Nachrüstung vorteilhaft ist.

Die Reinigung des Katalysators muß von Zeit zu Zeit durchgeführt werden, um den an der Katalysatoroberfläche anhaftenden Belag zu entfernen. Dies geschieht mittels einer Reinigungsvorrichtung 27, 27′ dadurch, daß man den Katalysator vorzugsweise im Gegenstrom, d. h. von oben nach unten, mit einer fettlösenden, lebensmittelechten Reinigungsflüssigkeit berieseln oder bestrahlen läßt.

Die Reinigungsvorrichtung 27 ist beispielsweise als rotierender Arm 28 mit nach unten gerichteten Hochdruckdüsen 29 ausgebildet, wobei die Düsen 29 durch schräge Austrittsöffnungen einen Dralleffekt zum Selbstantrieb erzeugen. Eine derartige

Reinigungsvorrichtung kann unterhalb 27′ und/oder oberhalb 27 des Katalysators 10 angeordnet sein.

## Patentansprüche

1. Verfahren zur Reduzierung des Cyanidgehalts und damit zur Verminderung der Bildung von Ethylcarbamat (EC) in Steinobstbranntweinen in einer Destillationsapparatur unter Verwendung von Kupfer als Katalysator, wobei die Maische in einer Brennblase erhitzt und die aufsteigenden Alkoholdämpfe einer Verstärkerkolonne mit Verstärkerböden, einem Dephlegmator und einer Kühlvorrichtung zugeführt werden, dadurch gekennzeichnet, daß zur Bindung der Cyanidbestandteile die vom obersten Verstärkerboden (7) aufsteigenden Dämpfe einem, vom Phlegma (15) des Dephlegmators (11) benetzten Kupferkatalysator und anschließend dem nachfolgenden Dephlegmator (11) zugeführt werden, wobei der Kupferkatalysator (10) aus einem Rohrbündel (17) oder aus Lamellenrohren (21) besteht, der jeweils in der vertikalen Durchströmungsrichtung der Destillationsapparatur (1) angeordnet ist.

2. Vorrichtung zur Durchführung des Verfahrens nach Anspruch 1 bestehend aus einer Brennblase mit nachgeschalteter Verstärkerkolonne, Dephlegmator und Kühlvorrichtung, dadurch gekennzeichnet, daß zwischen dem obersten Verstärkerboden (7) und dem Dephlegmator (11) ein aus Kupfer bestehender Katalysator (10) mit großer Kupferoberfläche angeordnet ist, wobei der Kupferkatalysator (10) aus einem Rohrbündel (17) oder aus Lamellenrohren (21) besteht, der jeweils in der vertikalen Durchströmungsrichtung der Destillationsapparatur (1) angeordnet ist.

3. Vorrichtung nach Anspruch 2, dadurch gekennzeichnet, daß der Kupferkatalysator eine wirksame Kupferoberfläche von wenigstens 10 m² aufweist, bei einem Außendurchmesser von D ≈ 400 mm.

4. Vorrichtung nach Anspruch 2, dadurch gekennzeichnet, daß die Lamellenrohre des Kupferkatalysators (21) aus einem vertikalen Rohrbündel bestehen, mit im Querschnitt rosettenförmig ausgebildeten Zwischenwänden (22).

5. Vorrichtung nach Anspruch 2, dadurch gekennzeichnet, daß der Kupferkatalysator (10, 23) aus einem konzentrisch gewickelten, zickzackförmigen Lamellenblech (25) besteht, mit einer angrenzenden, gleichzeitig gewickelten Blechwandung (24).

6. Vorrichtung nach den vorhergehenden Ansprüchen 2 bis 5, dadurch gekennzeichnet, daß oberhalb des Katalysators ein Verteilerblech (26) zur gleichmäßigen Berieselung des Katalysators mit zurückströmenden Phlegma (15) vom Dephlegmator (11) vorgesehen ist.

7. Vorrichtung nach den vorhergehenden Ansprüchen 2 bis 6, dadurch gekennzeichnet, daß die Reinigung des Katalysators (10) mittels einer oberhalb und/oder unterhalb des Katalysators angeordneten, vorzugsweise als drehender Arm (28) mit Hochdruckdüsen (29) ausgebildeten Reinigungsvorrichtung (27, 27') mit Waschflüssigkeit erfolgt.

## Claims

1. Method for reducing the cyanide content and thus for reducing the formation of ethyl carbamate (EC) in stone fruit spirits in a distillation apparatus using copper as the catalyst, the mash being heated in an alembic still and the rising alcohol vapours being supplied to a concentrating column with concentrating bases, a fractionating column and a cooling apparatus, characterised in that for bonding the cyanide components, the vapours rising from the uppermost concentrating base (7) are supplied to a copper catalyst wetted by the fraction (15) of the fractionating column (11) and then to the subsequent fractionating column (11), the copper catalyst (10) consisting of a bundle of tubes (17) or of ribbed tubes (21), which is/are located respectively in the vertical throughflow direction of the distillation apparatus (1).

2. Apparatus for carrying out the method according to Claim 1, consisting of an alembic still with subsequent concentrating column, fractionating column and cooling apparatus, characterised in that located between the uppermost concentrating base (7) and the fractionating column (11) is a catalyst (10) consisting of copper, with a large copper surface, the copper catalyst (10) consisting of a bundle of tubes (17) or of ribbed tubes (21), which is/are located respectively in the vertical throughflow direction of the distillation apparatus (1).

3. Apparatus according to Claim 2, characterised in that the copper catalyst has an effective copper surface of at least 10 m², with an outer diameter of D ≈ 400 mm.

4. Apparatus according to Claim 2, characterised in that the ribbed tubes of the copper catalyst (21) consist of a vertical bundle of tubes, with intermediate walls (22) constructed with a cross-section in the shape of a rosette.

5. Apparatus according to Claim 2, characterised in that the copper catalyst (10, 23) consists of a concentrically wound, zig-zag shaped laminated sheet metal plate (25), with an adjoining sheet metal wall (24) wound at the same time.

6. Apparatus according to the preceding Claims 2 to 5, characterised in that provided above the catalyst is a distribution plate (26) for the uniform sprinkling of the catalyst with fractions (15) flowing back from the fractionating column (11).

7. Apparatus according to the preceding Claims 2 to 6, characterised in that the cleaning of the catalyst (10) takes place with washing liquid by means of a cleaning device (27, 27') located above and/or below the catalyst and preferably constructed as a rotating arm (28) with high pressure jets (29).

## Revendications

1. Procédé pour réduire la teneur en cyanure et, ainsi, pour diminuer la formation d'éthylcarbamate (EC) dans des eaux-de-vie de fruits à noyau dans un appareil de distillation, en utilisant du cuivre comme catalyseur, le moût étant chauffé dans un alambic et les vapeurs d'alcool qui montent d'une colonne à plateaux de distillation étant amenées à un déflegmateur et à un dispositif de refroidissement,
caractérisé en ce que, pour lier les constituants de cyanure, les vapeurs, montant du plateau de distillation (7) le plus élevé, sont amenées à un catalyseur de cuivre mouillé par le flegme (15) du déflegmateur (11) et, ensuite, au déflegmateur (11) suivant, le catalyseur de cuivre (10) étant constitué d'un faisceau de tubes (17) ou de tubes à lamelles (21), qui sont agencés, à chaque fois, dans la direction de traversée verticale de l'appareil de distillation (1).

2. Dispositif pour mettre en oeuvre la procédé selon la revendication 1, comportant un alambic présentant une colonne de distillation en aval, un déflegmateur, et un dispositif de refroidissement,
caractérisé en ce que, entre le plateau de distillation (7) le plus élevé et le déflegmateur (11), est agencé un catalyseur (10) constitué de cuivre, ayant une grande surface de cuivre, le catalyseur de cuivre (10) étant constitué d'un faisceau de tubes (17) ou de tubes à lamelles (21), qui sont agencés, à chaque fois, dans la direction de traversée verticale de l'appareil de distillation (1).

3. Dispositif selon la revendication 2,
caractérisé en ce que le catalyseur de cuivre présente une surface de cuivre efficace d'au moins 10 m², pour un diamètre externe D ∼ 400 mm.

4. Dispositif selon la revendication 2,
caractérisé en ce que les tubes à lamelles du catalyseur de cuivre (21) sont constitués d'un faisceau de tubes vertical, avec des parois intermédiaires (22) présentant une forme de rosace en coupe transversale.

5. Dispositif selon la revendication 2,
caractérisé en ce que le catalyseur de cuivre (10,23) est constitué d'une tôle à lamelles (25), en forme de zigzag, concentriquement enroulée, avec une paroi de tôle adjacente (24), simultanément enroulée.

6. Dispositif selon les revendications précédentes 2 à 5, caractérisé en ce que, au-dessus du catalyseur, est prévue une tôle de répartition (26) pour arroser uniformément le catalyseur de flegme (15) à contre-courant, provenant du déflegmateur (11).

7. Dispositif selon les revendications précédentes 2 à 6, caractérisé en ce que le nettoyage du catalyseur (10) est effectué par du liquide de lavage au moyen d'un dispositif de nettoyage (27,27') agencé au-dessus et/ou au-dessous du catalyseur et réalisé de préférence comme bras rotatif (28) à buses (29) à haute pression.
